# EUROPÄISCHE PATENTSCHRIFT

(11) **EP 3 845 422 B1**
(45) Veröffentlichungstag und Bekanntmachung des Hinweises auf die Patenterteilung: **05.04.2023**
(21) Anmeldenummer: 20208263.2
(22) Anmeldetag: 18.11.2020
(51) Int. Cl.: B60S 1/38, B60S 1/52

(54) **WISCHERVORRICHTUNG, SCHEIBENWISCHER UND MONTAGEVERFAHREN**
WIPER DEVICE, WINDSCREEN WIPER AND MOUNTING METHOD
DISPOSITIF ESSUIE-GLACE, ESSUIE-GLACE ET PROCÉDÉ DE MONTAGE

(30) Priorität: 30.12.2019 DE 102019220612
(43) Veröffentlichungstag der Anmeldung: 07.07.2021
(73) Patentinhaber: Robert Bosch GmbH, 70442 Stuttgart (DE)
(72) Erfinder: Maerkle, Jens, 77815 Buehl (DE); Formisano, Salvatore, 76316 Malsch (DE)

(56) Entgegenhaltungen:
- EP-A1- 2 328 784
- WO-A1-2012/041907
- DE-A1-102013 103 279

## Beschreibung

### Stand der Technik

Es ist bereits eine Wischervorrichtung mit zumindest einem Wischblattadapter, welcher zumindest ein fluidisches Verbindungselement aufweist, mit zumindest einem Wischarmadapter, mit zumindest einer Abdeckeinheit, mit einem fluidischen Koppelelement zu einer fluidischen Verbindung mit dem zumindest einen fluidischen Verbindungselement, mit zumindest einem Fluidsperrelement zu einem Fixieren der fluidischen Verbindung des zumindest einen fluidischen Koppelements mit dem zumindest einen fluidischen Verbindungselement, und mit zumindest einem Abdeckfixierelement zu einer zumindest teilweisen Positionsfi-xierung der zumindest einen Abdeckeinheit mit dem zumindest einen Wischarmadapter, vorgeschlagen worden. Eine gattungsgemäße Wischervorrichtung ist aus der DE 10 2013 103279 A1 bekannt.

### Offenbarung der Erfindung

Die Erfindung geht aus von einer Wischervorrichtung mit zumindest einem Wischblattadapter, welcher zumindest ein fluidisches Verbindungselement aufweist, mit zumindest einem Wischarmadapter, mit zumindest einer Abdeckeinheit, mit einem fluidischen Koppelelement zu einer fluidischen Verbindung mit dem zumindest einen fluidischen Verbindungselement, mit zumindest einem Fluidsperrelement zu einem Fixieren der fluidischen Verbindung des zumindest einen fluidischen Koppelements mit dem zumindest einen fluidischen Verbindungselement, und mit zumindest einem Abdeckfixierelement zu einer zumindest teilweisen Positionsfixierung der zumindest einen Abdeckeinheit mit dem zumindest einen Wischarmadapter.

Gemäß der Erfindung weist die Wischervorrichtung zumindest ein Betätigungselement auf, welches dazu vorgesehen ist, das zumindest eine Fluidsperrelement und das zumindest eine Abdeckfixierelement zusammen durch eine, insbesondere translatorische, Bewegung des Betätigungselements relativ zu dem Wischarmadapter in eine Verbindungsposition und/oder in eine Lösungsposition zu überführen, wobei zumindest eine fluidische Koppelement beweglich, insbesondere querverschieblich, gegenüber der zumindest einen Abdeckeinheit, an der zumindest einen Adeckeinheit gelagert ist.

Unter einer "Wischervorrichtung" soll vorzugsweise zumindest ein Teil, bevorzugt eine Unterbaugruppe, eines Scheibenwischers verstanden werden. Vorzugsweise kann die Wischervorrichtung auch den gesamten Scheibenwischer, insbesondere mit einem Wischblatt, umfassen. Vorzugsweise ist die Wischervorrichtung zu einem Einsatz an einem Fahrzeug vorgesehen. Vorzugsweise ist die Wischervorrichtung, insbesondere als Teil des Scheibenwischers, zu einer Reinigung einer Fläche, bevorzugt einer Scheibe an einem Fahrzeug, vorgesehen. Vorzugsweise ist die Wischervorrichtung zu einer Reinigung einer Fahrzeugscheibe mit einem Fahrzeug, vorzugsweise einem Wischarm eines Fahrzeugs, gekoppelt. Unter "vorgesehen" soll vorzugsweise speziell eingerichtet, speziell ausgelegt und/oder speziell ausgestattet verstanden werden. Darunter, dass ein Objekt zu einer bestimmten Funktion vorgesehen ist, soll vorzugsweise verstanden werden, dass das Objekt diese bestimmte Funktion in zumindest einem Anwendungs- und/oder Betriebszustand erfüllt und/oder ausführt. Unter einem "Betriebszustand" soll vorzugsweise ein Zustand verstanden werden, in dem die Wischervorrichtung betriebsbereit für einen Wischvorgang und/oder einen Wischbetrieb ist und/oder zumindest mit einem Wischarm und/oder einem Wischblatt gekoppelt ist und/oder sich in einem Wischbetrieb befindet, in welchem eine Wischleisteneinheit der Wischervorrichtung, insbesondere des Scheibenwischers, bevorzugt über eine Fahrzeugscheibe geführt ist und dabei vorteilhaft an der Fahrzeugscheibe anliegt.

Vorzugsweise weist der Wischarmadapter eine Längsachse auf, welche zumindest im Wesentlichen parallel zu einer Längsachse des Wischarms ausgerichtet ist. Vorzugsweise weist der Wischarmadapter eine maximale Längserstreckung auf, welche zumindest im Wesentlichen parallel zu einer maximalen Längserstreckungen des Wischarms ausgerichtet ist. Unter einer "Längserstreckung" eines Objekts soll vorzugsweise eine Erstreckung des Objekts entlang einer Längsachse des Objekts verstanden werden. Unter einer "Längsachse" eines Objekts soll vorzugsweise eine Achse verstanden werden, welche parallel zu einer längsten Kante eines kleinsten geometrischen Quaders ausgerichtet ist, welcher das Objekt gerade noch vollständig umschließt. Unter "im Wesentlichen parallel" soll vorzugsweise eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Vorzugsweise ist der Wischarmadapter, insbesondere unverlierbar, bevorzugt einstückig, mit dem Wischarm verbunden. Vorzugsweise ist der Wischarmadapter als ein Side-Lock-Adapter ausgebildet. Vorzugsweise umfasst der Wischarmadapter zumindest ein Stiftelement. Vorzugsweise ist das zumindest eine Stiftelement zu einer mechanischen Kopplung, insbesondere zu einer schwenkbaren Lagerung, des Wischblattadapters mit dem, insbesondere an dem, Wischarmadapter vorgesehen. Vorzugsweise bildet das zumindest eine Stiftelement eine Schwenkachse aus. Vorzugsweise ist die Schwenkachse zumindest im Wesentlichen senkrecht zu einer Längsachse des Wischarmadapters, insbesondere des Wischarms, ausgerichtet. Der Ausdruck "im Wesentlichen senkrecht" soll vorzugsweise eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Vorzugsweise ist eine Längsachse des Stiftelements im Wesentlichen senkrecht zu der Längsachse des Wischarmadapters ausgerichtet. Vorzugsweise ist die Längsachse des Stiftelements im Wesentlichen parallel zu einer Querachse des Wischarmadapters ausgerichtet. Vorzugsweise weist das Stiftelement eine maximale Längserstreckung auf, welche parallel zu der Querachse des Wischarmadapters, insbesondere des Wischarms, ausgerichtet ist. Vorzugsweise ist die Schwenkachse parallel zu einer Querachse des Wischarmadapters, insbesondere des Wischarms, ausgerichtet. Vorzugsweise ist eine maximale Quererstreckung des Wischarmadapters parallel zu der Längsachse des Stiftelements, insbesondere der von dem Stiftelement ausgebildeten Schwenkachse, ausgerichtet. Vorzugsweise soll unter einer "Quererstreckung" eines Objekts eine Erstreckung des Objekts entlang einer Querachse des Objekts verstanden werden. Unter einer "Querachse" eines Objekts soll vorzugsweise eine Achse verstanden werden, welche senkrecht zu einer Längsachse des Objekts ausgerichtet ist. Vorzugsweise weist der Wischarmadapter einen Haltebügel auf. Vorzugsweise ist eine Längsachse des zumindest einen Haltebügels des Wischarms parallel zu der Querachse der Abdeckeinheit ausgerichtet. Vorzugsweise ist eine maximale Längserstreckung des zumindest einen Haltebügels parallel zu der Querachse der Abdeckeinheit ausgerichtet. Vorzugsweise ist der Haltebügel dazu vorgesehen, ein Abrutschen des Wischblattadapters von dem Stiftelement des Wischarmadapters, insbesondere in eine Richtung der Querachse der Abdeckeinheit, zu verhindern.

Vorzugsweise weist der Wischblattadapter zumindest ein Verbindungselement zu einer Verbindung mit dem Wischarmadapter, insbesondere dem Stiftelement des Wischarmadapters, auf. Vorzugsweise ist das Verbindungselement des Wischblattadapters dazu vorgesehen, das zumindest eine Stiftelement des Wischarmadapters aufzunehmen. Vorzugsweise ist das zumindest eine Verbindungselement dazu vorgesehen, das zumindest eine Stiftelement schwenkbar zu lagern. Vorzugsweise weist das zumindest eine Verbindungselement zumindest eine Ausnehmung zu einer Aufnahme des zumindest einen Stiftelements auf. Vorzugsweise verläuft die zumindest eine Schwenkachse, insbesondere mittig, durch die zumindest eine Ausnehmung des Verbindungselements. Vorzugsweise ist der zumindest eine Wischblattadapter, insbesondere das zumindest eine Wischblatt, um die Schwenkachse schwenkbar an dem zumindest einen Wischarmadapter, insbesondere gegenüber dem zumindest einen Wischarm, gelagert.

Vorzugsweise ist die Abdeckeinheit zumindest schwenkbar an dem Wischarm, insbesondere dem Wischarmadapter, gelagert. Bevorzugt ist die Abdeckeinheit unverlierbar mit dem Wischarm, insbesondere dem Wischarmadapter, verbunden. Vorzugsweise ist die Abdeckeinheit um eine Abdeckschwenkachse schwenkbar an dem Wischarm, insbesondere dem Wischarmadapter, gelagert. Vorzugsweise ist die Abdeckschwenkachse parallel zu der Schwenkachse ausgerichtet. Vorzugsweise ist die Abdeckschwenkachse beabstandet von der Schwenkachse. Insbesondere sind die Abdeckschwenkachse und die Schwenkachse zwei verschiedenen Achsen.

Vorzugsweise ist das fluidische Koppelelement als ein Stecker, insbesondere eine Steckkupplung, ausgebildet. Vorzugsweise ist das fluidische Koppelelement mit zumindest einer Fluidzuleitung des Wischarms verbunden. Vorzugsweise ist das zumindest eine fluidische Koppelelement als ein Endstück der zumindest einen Fluidzuleitung des Wischarms ausgebildet. Vorzugsweise begrenzt das zumindest eine fluidische Koppelelement zumindest einen Fluidkanal, welcher insbesondere abgewinkelt, bevorzugt zumindest um 45°, besonders bevorzugt zumindest um 90°, ausgebildet ist. Vorzugsweise ist eine Anschlussrichtung, insbesondere eine Steckrichtung, des zumindest einen fluidischen Koppelelements senkrecht zur Längsachse des Wischarmadapters, insbesondere des Wischarms, insbesondere des Wischblattadapters, insbesondere des Wischblatts, ausgerichtet, bevorzugt zumindest im verbundenen Zustand. Vorzugsweise ist das zumindest eine fluidische Koppelelement mit einem Verschwenken der Abdeckeinheit, insbesondere um die Abdeckschwenkachse, verbindbar und/oder lösbar mit/von dem zumindest einen fluidischen Verbindungselement ausgebildet.

Vorzugsweise ist das fluidische Verbindungselement als eine Steckerbuchse, insbesondere eine Steckkupplung, des Wischblattadapters ausgebildet. Vorzugsweise ist eine Anschlussrichtung, insbesondere eine Steckrichtung, des zumindest einen fluidischen Verbindungselements senkrecht zur Längsachse des Wischarmadapters, insbesondere des Wischarms, insbesondere des Wischblattadapters, insbesondere des Wischblatts, ausgerichtet, bevorzugt zumindest im verbundenen Zustand. Vorzugsweise ist das zumindest eine fluidische Verbindungselement mit einem Verschwenken der Abdeckeinheit, insbesondere um die Abdeckschwenkachse, verbindbar und/oder lösbar mit/von dem zumindest einen fluidischen Koppelelement ausgebildet.

Vorzugsweise umfasst die Abdeckeinheit ein Kappenelement, welches dazu vorgesehen ist, den Wischblattadapter, insbesondere den Wischarmadapter, zumindest teilweise, bevorzugt zumindest zum Großteil, abzudecken. Vorzugsweise ist das zumindest eine Kappenelement dazu vorgesehen, zumindest das zumindest eine fluidische Koppelelement und das zumindest eine fluidische Verbindungselement abzudecken. Vorzugsweise ist das zumindest eine Kappenelement dazu vorgesehen, zumindest das zumindest eine Abdeckfixierelement abzudecken. Das Kappenelement ist insbesondere von einer Abdeckkappe gebildet. Vorzugsweise ist das Fluidsperrelement dazu vorgesehen, eine Verbindung des zumindest einen fluidischen Koppelelements mit dem zumindest einen fluidischen Verbindungselement zu fixieren, insbesondere gegenüber einem fluidischen Druck, insbesondere durch die Verbindung, von zumindest 1 bar, bevorzugt von zumindest 2 bar, besonders bevorzugt von zumindest 3 bar, und ganz besonders bevorzugt von zumindest 4 bar.

Vorzugsweise ist das Abdeckfixierelement hakenartig ausgebildet, insbesondere zu einem zumindest teilweisen Umgreifen des Haltebügels des Wischblattadapters. Vorzugsweise ist das Abdeckfixierelement dazu vorgesehen, eine Verbindung der zumindest einen Abdeckeinheit, insbesondere des zumindest einen Kappenelements, mit dem zumindest einen Wischarmadapter auszubilden. Vorzugsweise ist das Abdeckfixierelement dazu vorgesehen, eine Verschwenkbarkeit der Abdeckeinheit, insbesondere des zumindest einen Kappenelements, gegenüber dem Wischarmadapter, insbesondere gegenüber dem Wischarm, um die Abdeckschwenkachse einzudämmen. Insbesondere ist das Abdeckfixierelement dazu vorgesehen, die Abdeckeinheit, insbesondere das Kappenelement, in einer definierten Schwenkposition um die Abdeckschwenkachse am Wischarmadapter zu fixieren.

Vorzugsweise ist das zumindest eine Betätigungselement als ein, insbesondere teilweise gegenüber der Abdeckeinheit, insbesondere gegenüber dem Kappenelement, verschiebbares Element ausgebildet, welches mit dem zumindest einen Fluidsperrelement und dem zumindest einen Abdeckfixierelement gekoppelt ist. Vorzugsweise ist das zumindest eine Betätigungselement begrenzt relativ zu einem weiteren Teil der Abdeckeinheit geführt. Das Betätigungselement kann als riegelartiges Element ausgebildet sein, welches zumindest durch einen Formschluss mit dem zumindest einen Fluidsperrelement und dem zumindest einen Abdeckfixierelement gekoppelt ist. Alternativ kann das Betätigungselement von dem Kappenelement gebildet sein. Vorzugsweise ist das zumindest eine Betätigungselement einstückig mit dem zumindest einen Abdeckfixierelement verbunden. Unter "einstückig" soll vorzugsweise zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Alternativ kann das zumindest eine Betätigungselement durch einen Formschluss, insbesondere Kraftschluss, mit dem zumindest einen Abdeckfixierelement verbunden sein. Vorzugsweise ist das Betätigungselement als verschiebbares Element ausgebildet, welches bei einem Verschieben das zumindest eine Fluidsperrelement, insbesondere durch einen Formschluss, verschiebt. Das zumindest eine Betätigungselement ist vorzugsweise aus einem Teil oder zwei separaten Teilen ausgebildet. Alternativ kann das zumindest eine Betätigungselement weitere Teile wie einen dritten, vierten, fünfte oder dgl. Teil/e umfassen. Vorzugsweise ist zumindest ein Teil und/oder Abschnitt des Betätigungselements axial entlang einer maximalen Längsachse des Betätigungselements betrachtet auf Höhe von einem Ende des Wischblattadapters, insbesondere des Wischarmadapters, insbesondere des Kappenelements, angeordnet. Vorzugsweise ist zumindest ein Teil und/oder Abschnitt des Betätigungselements an einem dem zumindest einen Ende gegenüberliegenden Ende der maximalen Längserstreckung des Wischblattadapters, insbesondere des Wischarmadapters, insbesondere des Kappenelements, angeordnet. Vorzugsweise erstreckt sich das Betätigungselement von einem Ende des Wischblattadapters, insbesondere des Wischarmadapters, insbesondere des Kappenelements, zu dem anderen, insbesondere gegenüberliegenden, Ende der maximalen Längserstreckung des Wischblattadapters, insbesondere des Wischarmadapters, insbesondere des Kappenelements. Vorzugsweise ist das Betätigungselement einteilig ausgebildet. Vorzugsweise ist das zumindest eine Betätigungselement durch einen Formschluss, insbesondere Kraftschluss, mit dem Fluidsperrelement verbunden. Vorzugsweise ist das zumindest eine Fluidsperrelement zwischen einem Teil und/oder Abschnitt des Betätigungselements und dem Abdeckfixierelement durch einen Formschluss, insbesondere Kraftschluss, mit dem Betätigungselement verbunden. Alternativ kann das zumindest eine Betätigungselement stoffschlüssig, wie beispielsweise verschweißt, verklebt und/oder aus einem Guss oder in einem Prozess gefertigt, mit einem Teil, insbesondere Außenteil, des zumindest einen Fluidsperrelements verbunden/ausgebildet sein. Vorzugsweise ist das Betätigungselement dazu vorgesehen, durch ein Verschieben, das zumindest eine Fluidsperrelement und zeitgleich das zumindest eine Abdeckfixierelement in die Verbindungsposition und/oder Lösungsposition zu bewegen. Vorzugsweise sichert das Fluidsperrelement in der Verbindungsposition die fluidische Verbindung des zumindest einen fluidischen Koppelelements mit dem zumindest einen fluidischen Verbindungselement. Vorzugsweise sichert das Abdeckfixierelement in der Verbindungsposition die Verbindung der Abdeckeinheit, insbesondere des Kappenelements, mit dem Wischarmadapter.

Durch die erfindungsgemäße Ausgestaltung der Wischervorrichtung kann eine vorteilhafte Beweglichkeit der Verbindung des Wischblattadapters mit dem Wischarmadapter, insbesondere Wischarm, erreicht werden. Insbesondere kann eine vorteilhaft bewegliche fluidische Verbindung des Wischblattadapters mit dem Wischarmadapter, insbesondere Wischarm, erreicht werden. Es kann insbesondere ein vorteilhaft verschwenkbarer Wischblattadapter zu einem Folgen einer, insbesondere lokal variierenden, Scheibenkrümmung durch ein mit dem Wischblattadapter gekoppeltes Wischblatt erreicht werden. Es kann eine vorteilhafte Lagerung eines Wischblatts an einem Wischarm erreicht werden. Es kann ein vorteilhaft genau anliegendes Wischblatt erreicht werden. Es kann eine vorteilhaft bewegliche gesicherte fluidische Verbindung des Wischblattadapters mit dem Wischarmadapter erreicht werden. Es kann eine vorteilhaft einfach lösbare und sperrbare fluidische Verbindung erreicht werden. Es kann, insbesondere für einen Endkunden, eine vorteilhaft einfache Montage von Wischblättern erreicht werden. Insbesondere kann vorteilhaft zusätzlich zu einer Montage des fluidischen Koppelelements eine Fixierung des fluidischen Koppelelements und eine Fixierung der Abdeckeinheit, insbesondere des Kappenelements, erreicht werden. Es kann eine Fixierung und ein Lösen der Fixierung der fluidischen Verbindung und der Verbindung der Abdeckeinheit, insbesondere des Kappenelements mit dem Wischarmadapter vorteilhaft gleichzeitig erreicht werden, wobei sich die Bauteile der beiden Verbindungen in einem fixierten Zustand, insbesondere Verbindungszustand, vorteilhaft relativ zueinander bewegen können.

Gemäß der Erfindung wird das zumindest eine fluidische Koppelelement beweglich, insbesondere querverschieblich, gegenüber der zumindest einen Abdeckeinheit, an der zumindest einen Abdeckeinheit gelagert. Vorzugsweise ist das zumindest eine fluidische Koppelelement zweidimensional schwimmend gelagert. Vorzugsweise kann das zumindest eine fluidische Koppelelement einer Schwenkbewegung des Wischblattadapters gegenüber dem Wischarmadapter um die Schwenkachse in einem verbundenen Zustand des zumindest einen Koppelelements und des zumindest einen fluidischen Verbindungselements durch eine bewegliche, insbesondere querverschiebliche, Lagerung folgen. Vorzugsweise ist das zumindest eine fluidische Koppelelement an der Abdeckeinheit, insbesondere in zumindest einer, bevorzugt in zumindest zwei, von der Abdeckeinheit begrenzten Lagerausnehmung, eingehängt, insbesondere unverlierbar, gelagert. Vorzugsweise weist das zumindest eine fluidische Koppelelement zumindest einen, bevorzugt zumindest zwei, Einhängungsfortsätze auf, insbesondere zu einem Einhängen in der zumindest einen, insbesondere zumindest zwei, Lagerausnehmung. Vorzugsweise sind die Lagerausnehmungen der Abdeckeinheit durch das Kappenelement begrenzt. Alternativ kann die zumindest eine Lagerausnehmung von einem anderen Bauteil der zumindest einen Abdeckeinheit begrenzt sein. Es ist alternativ technisch problemlos realisierbar, dass das zumindest eine fluidische Koppelelement zumindest zwei Lagerausnehmungen begrenzt. Es ist alternativ technisch problemlos realisierbar, dass die Abdeckeinheit zumindest einen, bevorzugt zumindest zwei, Einhängungsfortsätze aufweist. Alternativ kann der zumindest eine Einhängungsfortsatz der Abdeckeinheit in der zumindest einen Lagerausnehmung des Koppelements angeordnet sein. Vorzugsweise ist die zumindest eine Lagerausnehmung in einer Lagerebene begrenzt. Vorzugsweise ist die zumindest eine Lagerausnehmung in Richtung der Schwenkachse, insbesondere Abdeckschwenkachse, unbegrenzt, insbesondere durch ein Bauteil, insbesondere das Kappenelement oder das fluidische Koppelelement oder das andere Bauteil der Abdeckeinheit, welches die Lagerausnehmung in der Lagerebene begrenzt. Vorzugsweise ist die Lagerebene eine geometrische Ebene, welche senkrecht zur Querachse der Abdeckeinheit, insbesondere zur Schwenkachse, insbesondere zur Abdeckschwenkachse, ausgerichtet ist. Vorzugsweise ist das zumindest eine fluidische Koppelement in der Lagerebene querverschieblich gegenüber der zumindest einen Abdeckeinheit an der zumindest einen Abdeckeinheit gelagert. Vorzugsweise ist ein Bewegungsspielraum, insbesondere der Querverschieblichkeit, des zumindest einen fluidischen Koppelelements entlang einer Längsachse der Abdeckeinheit, insbesondere des Kappenelements, kleiner als ein Bewegungsspielraum des zumindest einen fluidischen Koppelelements in der Lagerebene senkrecht zu der Längsachse der Abdeckeinheit, insbesondere des Kappenelements. Vorzugsweise erstreckt sich eine maximale Erstreckung der zumindest eine Lagerausnehmung zumindest im Wesentlichen senkrecht zur Längsachse und zur Querachse der Abdeckeinheit. Die zumindest eine Lagerausnehmung kann entlang der maximalen Erstreckung, insbesondere in Richtung des Wischblattadapters, der zumindest einen Lagerausnehmung zumindest abschnittsweise verjüngt ausgebildet sein. Die zumindest eine Lagerausnehmung kann an einem entlang der maximalen Erstreckung der Lagerausnehmung betrachtet von der Abdeckschwenkachse, insbesondere betrachtet von dem Kappenelement, zugewandten Ende eine größere Breitenerstreckung, insbesondere entlang der Längsachse der Abdeckeinheit aufweisen, als an einem dem der Abdeckschwenkachse abgewandten Ende der Lagerausnehmung. Vorzugsweise ist das zumindest eine fluidische Koppelelement in der Lagerebene entlang der Längsachse der Abdeckeinheit, insbesondere des Kappenelements oder eines anderen Bauteils der Abdeckeinheit, um maximal 0,3 cm, bevorzugt maximal 0,2 cm, beweglich. Vorzugsweise ist das zumindest eine fluidische Koppelelement in der Lagerebene senkrecht zu der Längsachse der Abdeckeinheit, insbesondere des Kappenelements, um maximal 1 cm, bevorzugt maximal 0,5 cm, beweglich. Vorzugsweise ist die zumindest eine Lagerausnehmung entlang der Längsachse der Abdeckeinheit auf eine maximale Erstreckung von 0,5 cm, bevorzugt maximal 0,25 cm, begrenzt. Vorzugsweise ist die zumindest eine Lagerausnehmung entlang der Längsachse der Abdeckeinheit auf eine maximale Erstreckung von 0,5 cm, bevorzugt maximal 0,3 cm, begrenzt. Vorzugsweise ist die zumindest eine Lagerausnehmung senkrecht zu der Längsachse der Abdeckeinheit auf eine maximale Erstreckung von 2 cm, bevorzugt maximal 1 cm, besonders bevorzugt von maximal 0,5 cm, begrenzt. Es kann eine vorteilhaft bewegliche Lagerung des fluidischen Koppelements erreicht werden. Es kann insbesondere erreicht werden, dass das fluidische Koppelelement durch ein Verschwenken der Abdeckeinheit mit dem zumindest einen fluidischen Verbindungselement verbindbar und/oder lösbar ist, wobei das fluidische Koppelelement in einem verbundenen Zustand mit dem fluidischen Verbindungselement mit dem Wischblatt gegenüber dem Wischarmadapter verschwenkbar ist. Es kann eine vorteilhaft sicherbare fluidische Verbindung des fluidischen Koppelelements mit dem zumindest einen fluidischen Verbindungselement erreicht werden. Es kann erreicht werden, dass das fluidische Koppelelement in einem mit dem fluidischen Verbindungselement verbundenen Zustand beweglich gegenüber der Abdeckeinheit mit der Abdeckeinheit verbunden ist.

Ferner wird vorgeschlagen, dass die zumindest eine Abdeckeinheit eine Rahmeneinheit zu einer beweglichen Lagerung des zumindest einen Betätigungselements aufweist, wobei die zumindest eine Abdeckeinheit durch ein zumindest teilweises Verschieben der zumindest einen Abdeckeinheit, insbesondere zumindest des Betätigungselements der Abdeckeinheit, gegenüber der zumindest einen Rahmeneinheit mit dem Wischarmadapter verbindbar oder lösbar ist. Vorzugsweise soll unter einem "teilweisen Verschieben der Abdeckeinheit" gegenüber der Rahmeneinheit ein Verschieben von von der Rahmeneinheit verschiedenen Bauteilen der Abdeckeinheit, insbesondere des zumindest einen Betätigungselements, bevorzugt des zumindest einen Kappenelements, gegenüber der Rahmeneinheit verstanden werden. Vorzugsweise ist das Kappenelement beweglich, insbesondere verschiebbar, an der Rahmeneinheit gelagert. Alternativ kann das zumindest eine Betätigungselement beweglich, insbesondere verschiebbar, an der Rahmeneinheit gelagert sein. Die Rahmeneinheit ist vorzugsweise aus einem Metall, aus einem Kunststoff oder einem anderem, einem Fachmann als sinnvoll erachteten Material ausgebildet. Vorzugsweise ist die Rahmeneinheit beweglich, insbesondere schwenkbar, insbesondere um die Abdeckschwenkachse, an dem Wischarmadapter und/oder an dem Wischarm gelagert. Vorzugsweise ist die Abdeckeinheit über die Rahmeneinheit mit dem Wischarmadapter und/oder dem Wischarm verbunden. Vorzugsweise weist die zumindest eine Rahmeneinheit zumindest eine, insbesondere längliche, Schiebeausnehmung auf, an welcher insbesondere das zumindest einen Kappenelement, beweglich, bevorzugt verschiebbar, gelagert ist. Vorzugsweise ist die Schiebeausnehmung auf eine maximale Erstreckung begrenzt, welche parallel zu einer Längsachse der Abdeckeinheit, insbesondere der Rahmeneinheit, bevorzugt des Kappenelements, insbesondere des Wischblattadapters, insbesondere des Wischblatts oder des Wischarms, ausgerichtet ist. Vorzugsweise ist die Schiebeausnehmung entlang der Längsachse der Abdeckeinheit, insbesondere der Rahmeneinheit, auf eine maximale Erstreckung von mindestens 3 cm, bevorzugt mindestens 5 cm, begrenzt. Vorzugsweise ist die Schiebeausnehmung entlang der Längsachse der Abdeckeinheit, insbesondere der Rahmeneinheit, auf eine maximale Erstreckung von maximal 8 cm, bevorzugt maximal 6 cm, begrenzt. Vorzugsweise ist die Schiebeausnehmung senkrecht zu der Längsachse der Abdeckeinheit, insbesondere der Rahmeneinheit, auf eine maximale Erstreckung von maximal 2 cm, bevorzugt maximal 1 cm, begrenzt. Es kann eine vorteilhafte Beweglichkeit zwischen dem Betätigungselement und dem Wischarmadapter und/oder dem Wischarm erreicht werden. Es kann eine vorteilhaft einfache Verschiebbarkeit des Betätigungselements erreicht werden. Es kann ein vorteilhaft leicht zu betätigendes Betätigungselement erreicht werden. Es kann ein vorteilhaft leicht erreichbares Betätigungselement an einer Außenseite der Rahmeneinheit ausgebildet werden.

Ferner wird vorgeschlagen, dass das zumindest eine Fluidsperrelement zumindest teilweise verschwenkbar gegenüber dem zumindest einen Wischarmadapter mit zumindest einem Betätigungselement verbunden ist. Vorzugsweise ist das zumindest eine Fluidsperrelement zu einer festen Verbindung mit dem Wischblattadapter vorgesehen. Vorzugsweise ist das Fluidsperrelement in einem mit dem Wischblattadapter verbundenen Zustand verschwenkbar gegenüber dem Wischarmadapter, insbesondere gegenüber dem Kappenelement, insbesondere zusammen mit dem Wischblattadapter. Vorzugsweise bildet das zumindest eine Fluidsperrelement einen Formschluss in Richtung der Längsachse der Abdeckeinheit, insbesondere des Wischarmadapters, mit dem zumindest einen Abdeckfixierelement, welches insbesondere einstückig mit dem Betätigungselement ausgebildet ist. Vorzugsweise bildet das zumindest eine Fluidsperrelement einen Formschluss mit dem zumindest einen Betätigungselement auf einer dem Abdeckfixierelement abgewandten Seite. Vorzugsweise ist das zumindest eine Betätigungselement durch einen Formschluss des zumindest einen Fluidsperrelements zwischen dem Abdeckfixierelement und einem Teil des Betätigungselements mit dem zumindest einen Fluidsperrelement verbunden. Vorzugsweise grenzt eine, insbesondere konkav, abgerundete Seite des Betätigungselements an eine insbesondere, konvex, abgerundete Seite des Fluidsperrelements. Vorzugsweise ist die, insbesondere konkav, abgerundete Seite des Betätigungselements entlang eines geometrischen Kreisbogens abgerundet ausgebildet, welcher einen Mittelpunkt aufweist, der auf der Schwenkachse des Wischarmadapters liegt. Vorzugsweise ist die, insbesondere konvex, abgerundete Seite des Fluidsperrelements entlang eines geometrischen Kreisbogens abgerundet ausgebildet, welcher einen Mittelpunkt aufweist, der auf der Schwenkachse des Wischarmadapters liegt. Vorzugsweise grenzt eine, insbesondere konvex, abgerundete Seite des Abdeckfixierelements an eine insbesondere, konkav, abgerundete Seite des Fluidsperrelements. Vorzugsweise ist die, insbesondere konvex, abgerundete Seite des Abdeckfixierelements entlang eines geometrischen Kreisbogens abgerundet ausgebildet, welcher einen Mittelpunkt aufweist, der auf der Schwenkachse des Wischarmadapters liegt. Vorzugsweise ist die, insbesondere konkav, abgerundete Seite des Fluidsperrelements entlang eines geometrischen Kreisbogens abgerundet ausgebildet, welcher einen Mittelpunkt aufweist, der auf der Schwenkachse des Wischarmadapters liegt. Vorzugsweise ist der Formschluss zwischen dem zumindest einen Abdeckfixierelement und dem zumindest einen Fluidsperrelement näher an der Schwenkachse des Wischarmadapters angeordnet als der Formschluss zwischen dem Fluidsperrelement und dem Betätigungselement. Es kann vorteilhaft erreicht werden, dass das Fluidsperrelement eine fluidische Verbindung des Koppelelements mit dem Verbindungselement sichert und eine Verschwenkbarkeit des Wischblattadapters, insbesondere des Wischblatts, insbesondere auf einer gekrümmten Scheibe, gegenüber dem Wischarmadapter, insbesondere um die Schwenkachse, ermöglicht.

Des Weiteren wird vorgeschlagen, dass das zumindest eine Fluidsperrelement beweglich, insbesondere verschwenkbar, gegenüber dem zumindest einen Abdeckfixierelement mit dem zumindest einen Wischblattadapter verbindbar ist. Vorzugsweise ist das Fluidsperrelement in einem mit dem Wischblattadapter verbundenen Zustand verschwenkbar gegenüber dem Abdeckfixierelement, insbesondere gegenüber dem Kappenelement und/oder der Rahmeneinheit, insbesondere zusammen mit dem Wischblattadapter, insbesondere um die Schwenkachse. Vorzugsweise sichert das Fluidsperrelement in jedem Schwenkwinkel, insbesondere um die Schwenkachse, in dem mit dem Wischblattadapter verbundenen Zustand des Fluidsperrelements die fluidische Verbindung des Koppelelements mit dem Verbindungselement. Vorzugsweise ist das Fluidsperrelement, zumindest in dem mit dem Wischblattadapter verbundenen Zustand, zwischen der Schwenkachse und der Abdeckschwenkachse angeordnet. Es kann eine vorteilhaft sichere Verbindung der Abdeckeinheit mit dem Wischarmadapter erreicht werden, wobei die fluidische Verbindung vorteilhaft eine Bewegung des Wischblattadapters, insbesondere des Wischblatts, entlang einer gekrümmten Scheibe vorteilhaft gesichert mitmachen kann.

Des Weiteren wird vorgeschlagen, dass die Wischervorrichtung zumindest ein Betätigungselement aufweist, welches in einer Verbindungsposition, insbesondere des Abdeckfixierelements und/oder des Fluidsperrelements, eine Rastverbindung mit dem Wischblattadapter ausbildet. Vorzugsweise bewegt, insbesondere verschiebt, das zumindest eine Betätigungselement bei einem Bewegen, insbesondere einem Verschieben des Betätigungselements, das zumindest eine Fluidsperrelement und/oder das zumindest eine Abdeckfixierelement, in eine Verbindungsposition oder in eine Lösungsposition des Betätigungselements, insbesondere des zumindest einen Fluidsperrelements und/oder des zumindest einen Abdeckfixierelements. Vorzugsweise ist in der Verbindungsposition das zumindest eine Fluidsperrelement mit dem Wischblattadapter verbunden. Vorzugsweise ist in der Lösungsposition das Fluidsperrelement beabstandet von dem fluidischen Verbindungselement. Vorzugsweise ist in der Verbindungsposition das Abdeckfixierelement mit dem Wischarmadapter verbunden. Vorzugsweise ist das zumindest eine Abdeckfixierelement in der Lösungsposition beabstandet von dem Wischarmadapter, insbesondere von dem Haltebügel. Vorzugsweise ist das zumindest eine Betätigungselement in der Verbindungsposition weiter beabstandet von der Abdeckschwenkachse als in der Lösungsposition des Betätigungselements. Vorzugsweise ist in der Verbindungsposition das zumindest eine Betätigungselement maximal, insbesondere in einem Bewegungsrahmen der Verschiebbarkeit des Betätigungselements, von der Abdeckschwenkachse, insbesondere von dem Wischarm, beabstandet und das Fluidsperrelement mit dem Wischblattadapter verbunden und das Abdeckfixierelement mit dem Wischarmadapter verbunden. Vorzugsweise bildet das zumindest eine Betätigungselement in der Verbindungsposition eine Rastverbindung mit dem Wischblattadapter in einem von der Abdeckeinheit überdeckten Bereich des Wischblattadapters aus. Alternativ kann das Betätigungselement in der Verbindungsposition eine Rastverbindung mit dem Wischblattadapter an einer von außen zugänglichen Stelle des Wischblattadapters ausbilden. Optional oder zusätzlich bildet das zumindest eine Betätigungselement eine Rastverbindung mit der zumindest einen Abdeckeinheit, insbesondere dem zumindest einen Kappenelement, in der Verbindungsposition aus. Ebenfalls optional oder zusätzlich bildet das zumindest eine Fluidsperrelement eine Rastverbindung mit dem zumindest einen Wischblattadapter, insbesondere dem zumindest einen fluidischen Verbindungselement, in der Verbindungsposition aus. Ebenfalls optional oder zusätzlich bildet das zumindest eine Abdeckfixierelement eine Rastverbindung mit dem zumindest einen Wischarmadapter, insbesondere mit dem zumindest einen Haltebügel, in der Verbindungsposition aus. Es kann eine vorteilhafte Sicherung der Verbindungsposition erreicht werden. Insbesondere kann ein Risiko eines ungewollten Verschiebens des Betätigungselements, insbesondere des Fluidsperrelements und/oder des Abdeckfixierelements, vorteilhaft gering gehalten werden.

Ferner wird vorgeschlagen, dass die Wischervorrichtung zumindest ein Betätigungselement aufweist, welches mit dem zumindest einen Abdeckfixierelement, insbesondere einstückig, verbunden ist. Vorzugsweise ist das Abdeckfixierelement einstückig mit einem Teil eines riegelartigen Betätigungselements ausgebildet. Alternativ ist das zumindest eine Abdeckfixierelement einstückig mit dem zumindest einen Kappenelement ausgebildet. Alternativ bildet das zumindest eine Kappenelement das zumindest eine Betätigungselement und ist insbesondere verschiebbar an der Rahmeneinheit gelagert. Es kann eine vorteilhafte Stabilität des Abdeckfixierelements, insbesondere des Betätigungselements, erreicht werden. Es kann eine vorteilhafte Haptik erreicht werden.

Des Weiteren wird vorgeschlagen, dass das zumindest eine fluidische Koppelelement, beweglich, insbesondere querverschieblich, mit der Rahmeneinheit verbunden ist. Vorzugsweise ist das fluidische Koppelelement beweglich, insbesondere querverschieblich, mit der Rahmeneinheit verbunden und unverbunden mit dem zumindest einen Kappenelement. Vorzugsweise ist das zumindest eine fluidische Koppelelement in einer Lagerausnehmung, analog zur der zumindest einen Lagerausnehmung der Abdeckeinheit, beweglich, insbesondere querverschieblich, mit der Rahmeneinheit gelagert. Vorzugsweise begrenzt die Rahmeneinheit die zumindest eine Lagerausnehmung. Es kann eine Anordnung des Betätigungselements an der Rahmeneinheit erreicht werden, bei welcher das Betätigungselement von dem Kappenelement gebildet sein kann.

Darüber hinaus wird ein Scheibenwischer, welcher zumindest eine erfindungsgemäße Wischervorrichtung umfasst, mit einem Wischarm und mit einem Wischblatt vorgeschlagen. Vorzugsweise umfasst das Wischblatt zumindest eine Wischleisteneinheit, insbesondere mit einer Wischlippe. Vorzugsweise umfasst das Wischblatt zumindest eine Federschiene. Vorzugsweise umfasst das Wischblatt zumindest zwei Wischblattendkappen. Vorzugsweise umfasst der Scheibenwischer zumindest einen Wischarm. Vorzugsweise umfasst der Scheibenwischer zumindest eine Fluidzuleitung. Es kann ein Scheibenwischer ausgebildet werden, welcher vorteilhaft aufeinander abgestimmte Komponenten aufweist, insbesondere zu einem Wischen einer Scheibe mit einer gebogenen Form. Es kann ein vorteilhaft beweglicher Scheibenwischer erreicht werden. Es kann ein vorteilhaft genaues Anliegen des Wischblatts an einer Scheibe, insbesondere mit einer gebogenen Form, erreicht werden.

Darüber hinaus wird ein Verfahren zur Montage einer erfindungsgemäßen Wischervorrichtung vorgeschlagen. In zumindest einem Verfahrensschritt wird die Abdeckeinheit zu einem Abdecken des Wischblattadapters an den Wischblattadapter verschwenkt. In zumindest einem Verfahrensschritt wird das fluidische Koppelelement mit dem fluidischen Verbindungselement verbunden. In zumindest einem Verfahrensschritt wird das Betätigungselement in Richtung der Längsachse der Abdeckeinheit und/oder des Wischblattadapters verschoben. In zumindest einem Verfahrensschritt werden das Fluidsperrelement und das Abdeckfixierelement in die Fixierposition verschoben. Es kann eine vorteilhaft zeitsparende und/oder kostengünstige Montage erreicht werden.

Die erfindungsgemäße Wischervorrichtung, der erfindungsgemäße Scheibenwischer und/oder das erfindungsgemäße Verfahren soll/sollen hierbei nicht auf die oben beschriebene Anwendung und Ausführungsform beschränkt sein. Insbesondere kann/können die erfindungsgemäße Wischervorrichtung, der erfindungsgemäße Scheibenwischer und/oder das erfindungsgemäße Verfahren zu einer Erfüllung einer hierin beschriebenen Funktionsweise eine von einer hierin genannten Anzahl von einzelnen Elementen, Bauteilen und Einheiten oder Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen erfindungsgemäßen Scheibenwischer mit einer erfindungsgemäßen Wischervorrichtung in einer schematischen teilweise geschnittenen Darstellung,
- Fig. 2: den erfindungsgemäßen Scheibenwischer mit der erfindungsgemäßen Wischervorrichtung in einer schematischen teilweise geschnittenen Darstellung,
- Fig. 3: den erfindungsgemäßen Scheibenwischer mit der erfindungsgemäßen Wischervorrichtung in einer schematischen teilweise transparenten Darstellung,
- Fig. 4: ein erfindungsgemäßes Verfahren zur Montage der Wischervorrichtung,
- Fig. 5: einen alternativen erfindungsgemäßen Scheibenwischer mit einer alternativen erfindungsgemäßen Wischervorrichtung in einer schematischen teilweise geschnittenen Darstellung,
- Fig. 6: den alternativen erfindungsgemäßen Scheibenwischer mit der alternativen erfindungsgemäßen Wischervorrichtung in einer schematischen teilweise geschnittenen Darstellung,
- Fig. 7: den alternativen erfindungsgemäßen Scheibenwischer mit der erfindungsgemäßen Wischervorrichtung in einer schematischen teilweise geschnittenen Darstellung,
- Fig. 8: ein Kappenelement der alternativen erfindungsgemäßen Wischervorrichtung in einer schematischen Darstellung,
- Fig. 9: den alternativen erfindungsgemäßen Scheibenwischer mit der alternativen erfindungsgemäßen Wischervorrichtung in einem von dem Kappenelement entkoppelten Zustand in einer schematischen Darstellung und
- Fig. 10: den alternativen erfindungsgemäßen Scheibenwischer mit der alternativen erfindungsgemäßen Wischervorrichtung in einer schematischen Darstellung.

### Beschreibung der Ausführungsbeispiele

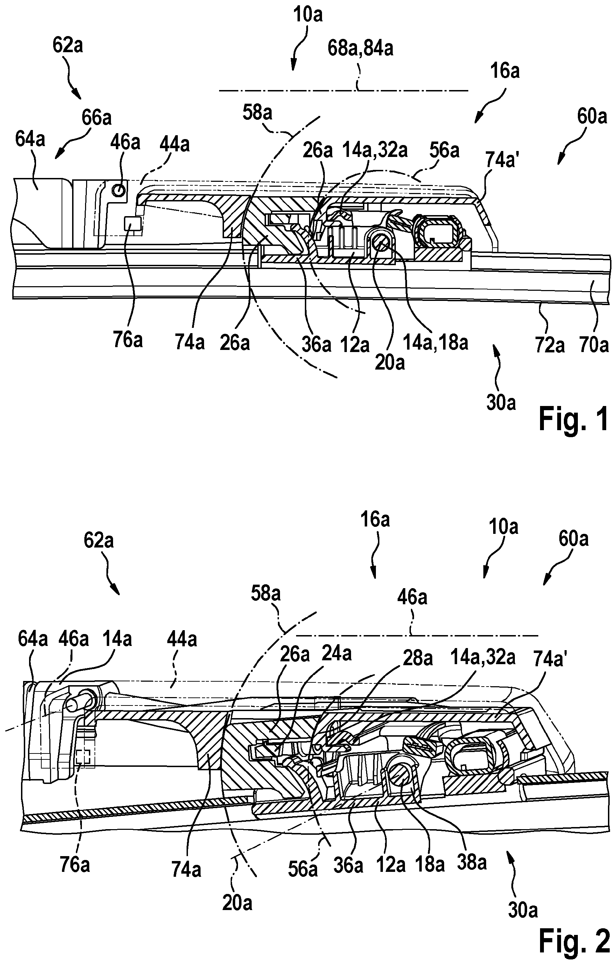

Figur 1 zeigt einen Scheibenwischer 62a. Der Scheibenwischer 62a umfasst einen Wischarm 64a. Der Scheibenwischer 62a umfasst ein Wischblatt 60a. Der Scheibenwischer 62a umfasst zumindest eine Wischervorrichtung 10a.

Der Scheibenwischer 62a umfasst zumindest einen Wischarm 64a. Der Scheibenwischer 62a umfasst eine nicht näher gezeigte Fluidzuleitung 66a. Die Fluidzuleitung 66a ist entlang des Wischarms 64a angeordnet. Die Fluidzuleitung 66a ist entlang des Wischarms 64a abschnittsweise mit dem Wischarm 64a verbunden. Die Fluidzuleitung 66a ist dazu vorgesehen, das Wischblatt 60a mit Wischwasser zu versorgen. An dem Wischarm 64a ist ein Wischarmadapter 14a der Wischervorrichtung 10a angeordnet. Der Wischarmadapter 14a ist einstückig mit dem Wischarm 64a verbunden.

Das Wischblatt 60a umfasst zumindest eine Wischleisteneinheit 70a, insbesondere mit einer Wischlippe 72a. Das Wischblatt 60a umfasst zwei nicht gezeigte Federschienen. Alternativ kann das Wischblatt 60a nur eine Federschiene umfassen. Das Wischblatt 60a umfasst zwei Spoilerelemente 34a, 34a'. Das Wischblatt 60a umfasst zwei nicht gezeigte Wischblattendkappen.

Die Wischervorrichtung 10a umfasst zumindest den Wischarmadapter 14a. Die Wischervorrichtung 10a umfasst zumindest einen Wischblattadapter 12a. Der Wischarmadapter 14a ist als Endstück des Wischarms 64a entlang einer Längsachse 84a des Wischarms 64a ausgebildet. Der Wischarmadapter 14a umfasst ein Stiftelement 18a. Das Stiftelement 18a ist zu einer beweglichen Lagerung des Wischblattadapters 12a an dem Wischarmadapter 14a vorgesehen. Das Stiftelement 18a bildet eine Schwenkachse 20a aus. Die Schwenkachse 20a ist parallel zu einer maximalen Quererstreckung des Wischarmadapters 14a und/oder eines Wischblattadapters 12a und/oder des Wischarms 64a ausgerichtet. Die Schwenkachse 20a ist senkrecht zu einer Längsachse 68a des Wischarmadapters 14a, insbesondere des Wischblatts 60a und/oder des Wischarms 64a und/oder des Wischblattadapters 12a, ausgerichtet. Das Stiftelement 18a weist eine maximale Längserstreckung auf, welche parallel zu einer maximalen Quererstreckung des Wischarmadapters 14a und/oder des Wischblattadapters 12a und/oder des Wischarms 64a ausgerichtet ist.

Der Wischarmadapter 14a weist einen Haltebügel 32a auf. Der Haltebügel 32a ist dazu vorgesehen, eine Verbindung des Wischarmadapters 14a mit dem Wischblattadapter 12a axial in Bezug auf die Schwenkachse 20a abzusichern. Der Haltebügel 32a weist ein abgewinkeltes, insbesondere um 90°, Ende auf. Der Haltebügel 32a weist eine maximale Längserstreckung auf, welche parallel zu einer maximalen Quererstreckung des Wischarmadapters 14a und/oder des Wischblattadapters 12a und/oder des Wischarms 64a ausgerichtet ist.

Die Wischervorrichtung 10a umfasst zumindest den Wischblattadapter 12a. Der Wischblattadapter 12a ist zwischen den Spoilerelementen 34a, 34a' angeordnet. Der Wischblattadapter 12a umfasst einen Grundkörper 36a. Der Wischblattadapter 12a, insbesondere der Grundkörper 36a, ist mit der Wischleisteneinheit 70a verbunden. Der Wischblattadapter 12a ist mit den Federschienen verbunden. Die Federschienen stabilisieren die Wischleisteneinheit 70a des Wischblatts 60a entlang der Längsachse 68a des Wischblatts 60a, insbesondere über die gesamte maximale Längserstreckung der Wischleisteneinheit 70a.

Der Wischblattadapter 12a weist zumindest ein fluidisches Verbindungselement 22a auf. Das fluidische Verbindungselement 22a bildet zwei Fluideingänge an dem Grundkörper 36a des Wischblattadapters 12a aus. Durch den Grundkörper 36a verlaufen zwei, insbesondere fluidisch getrennte, Fluidkanäle des Wischblattadapters 12a, insbesondere zu einer Bedienung zweier Wischrichtungen des Wischblatts 60a mit Wischwasser. Der Grundkörper 36a, insbesondere jeder Fluidkanal, ist mit einer Kanaleinheit der Wischleisteneinheit 70a und/oder der Spoilerelemente 34a, 34a' fluidisch verbunden. Der Grundkörper 36a weist fünf Fluidausgabeelemente 42a, insbesondere Fluidausgabedüsen, auf. Der Wischblattadapter 12a, insbesondere der Grundkörper 36a, weist zumindest ein mechanisches Verbindungselement 38a auf. Das mechanische Verbindungselement 38a ist dazu vorgesehen, das Stiftelement 18a des Wischarmadapters 14a aufzunehmen und insbesondere schwenkbar, insbesondere um die Schwenkachse 20a, zu lagern.

Die Wischervorrichtung 10a umfasst eine Abdeckeinheit 16a. In den Figuren 1, 2 und 3 ist insbesondere die Abdeckeinheit 16a der Wischervorrichtung 10a aus verschiedenen Perspektiven und/oder in unterschiedlichen Darstellungen gezeigt.

Die Abdeckeinheit 16a umfasst ein Kappenelement 44a. Das Kappenelement 44a ist beispielsweise einteilig ausgebildet. In den Figuren 1 bis 3 ist das Kappenelement 44a insbesondere teiltransparent dargestellt.

Die Abdeckeinheit 16a ist mit dem Wischarmadapter 14a verbunden. Die Abdeckeinheit 16a ist beweglich mit dem Wischarmadapter 14a verbunden. Die Abdeckeinheit 16a ist um eine Abdeckschwenkachse 46a verschwenkbar mit dem Wischarmadapter 14a verbunden. Figur 1 und 2 zeigen die Abdeckeinheit 16a in einem unverschwenkten Zustand an dem Wischarmadapter 14a. Figuren 1 und 2 zeigen die Abdeckeinheit 16a insbesondere mit dem Fluidsperrelement 26a und dem Abdeckfixierelement 28a in einer Verbindungsposition.

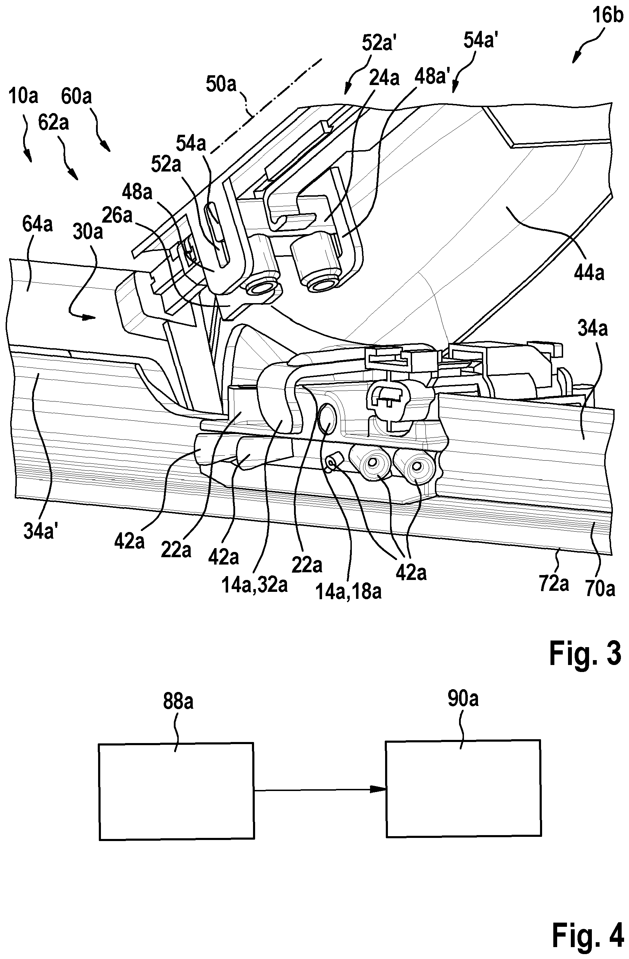

Figur 3 zeigt die Abdeckeinheit 16a in einem verschwenkten, insbesondere aufgeschwenkten, Zustand an dem Wischarmadapter 14a.

Insbesondere ist das Kappenelement 44a verschwenkbar, insbesondere um die Abdeckschwenkachse 46a, mit dem Wischarmadapter 14a verbunden. Das Kappenelement 44a, insbesondere der Abdeckeinheit 16a, ist unverschieblich mit dem Wischarmadapter 14a verbunden.

Die Wischervorrichtung 10a umfasst zumindest ein fluidisches Koppelelement 24a. Das fluidische Koppelelement 24a ist mit der Fluidzuleitung 66a des Scheibenwischers 62a fluidisch verbunden. Insbesondere ist das fluidische Koppelelement 24a als ein Endstück der Fluidzuleitung 66a ausgebildet. Das fluidische Koppelelement 24a ist zu einer fluidischen Verbindung mit dem zumindest einen fluidischen Verbindungselement 22a vorgesehen. Durch ein Verschwenken der Abdeckeinheit 16a ist das fluidische Koppelelement 24a mit dem fluidischen Verbindungselement 22a fluidisch verbindbar oder lösbar.

An dem Kappenelement 44a ist das fluidische Koppelelement 24a gelagert. Das Kappenelement 44a bildet zwei, insbesondere sich in Richtung der Wischlippe 72a des Wischblatts 60a erstreckende, Lagerungsfortsätze 48a, 48a' (vgl. Fig. 3). Die Lagerungsfortsätze 48a, 48a' sind senkrecht zu einer Längsachse 50a der Abdeckeinheit 16a ausgerichtet. Mittig in den Lagerungsfortsätze 48a, 48a' ist eine Lagerausnehmung 52a, 52a' der Abdeckeinheit 16a angeordnet.

Die Lagerausnehmungen 52a, 52a' sind von dem Kappenelement 44a begrenzt. Die Lagerausnehmungen 52a, 52a' sind auf eine maximale Erstreckung begrenzt, welche senkrecht zu der Längsachse 50a der Abdeckeinheit 16a ausgerichtet ist. Die zumindest zwei Lagerausnehmungen 52a, 52a' sind jeweils symmetrisch, insbesondere zumindest im Wesentlichen mit einer quaderförmigen Außenkontur, ausgebildet. Die zumindest zwei Lagerausnehmungen 52a, 52a' können jeweils eine asymmetrische Form aufweisen. Die zumindest zwei Lagerausnehmungen 52a, 52a' sind analog zueinander ausgebildet. Die zumindest zwei Lagerausnehmungen 52a, 52a' sind auf sich gegenüberliegenden Seiten der Abdeckeinheit 16a, insbesondere des Kappenelements 44a, angeordnet. Entlang der Längsachse 50a der Abdeckeinheit 16a können die Lagerausnehmungen 52a, 52a' auf unterschiedliche Erstreckungen begrenzt sein. Insbesondere können die zwei Lagerausnehmungen 52a, 52a' an einem dem Wischblattadapter 12a zugewandten Ende auf eine kürzere Erstreckung parallel zur Längsachse 50a der Abdeckeinheit 16a begrenzt sein als an einem dem zumindest einen Wischblattadapter 12a abgewandten Ende der Lagerausnehmungen 52a, 52a'.

Das fluidische Koppelelement 24a weist zwei Einhängungsfortsätze 54a, 54a', insbesondere Einhängungsrippen, auf, insbesondere zu einem Einhängen in der zumindest einen, insbesondere zumindest zwei, Lagerausnehmung 52a, 52a' an der Abdeckeinheit 16a (vgl. Fig. 3). Vorzugsweise erstrecken sich die Einhängungsfortsätze 54a, 54a' parallel zur Schwenkachse 20a, insbesondere zur Abdeckschwenkachse 46a, insbesondere senkrecht zur Längsachse 50a der Abdeckeinheit 16a. Die Einhängungsfortsätze 54a, 54a' des fluidischen Koppelelements 24a weisen eine längliche Form auf in einem Schnitt, insbesondere entlang einer Ebene senkrecht zur Längsachse 50a der Abdeckeinheit 16a betrachtet.

Das zumindest eine fluidische Koppelelement 24a ist beweglich gegenüber der zumindest einen Abdeckeinheit 16a, an der zumindest einen Abdeckeinheit 16a gelagert. Das zumindest eine fluidische Koppelelement 24a ist querverschieblich gegenüber der zumindest einen Abdeckeinheit 16a, an der zumindest einen Abdeckeinheit 16a gelagert. Insbesondere ist das fluidische Koppelelement 24a querverschieblich in einer Ebene senkrecht zur Schwenkachse 20a, insbesondere zur Abdeckschwenkachse 46a, an der Abdeckeinheit 16a, insbesondere an dem Kappenelement 44a der Abdeckeinheit 16a, insbesondere in den Lagerausnehmungen 52a, 52a', gelagert. Insbesondere bilden die Lagerausnehmungen 52a, 52a' eine Limitierung der Freiheitsgrade für die Einhängungsfortsätze 54a, 54a' aus.

Die Abdeckeinheit 16a weist zumindest ein Fluidsperrelement 26a auf. Das Fluidsperrelement 26a ist dazu vorgesehen, eine fluidische Verbindung des fluidischen Koppelelements 24a mit dem fluidischen Verbindungselement 22a zu sichern.

Das Fluidsperrelement 26a ist mit der Abdeckeinheit 16a um die Abdeckschwenkachse 46a schwenkbar gegenüber dem Wischarmadapter 14a. Das Fluidsperrelement 26a ist von dem Kappenelement 44a bedeckt aus einer dem Wischblattadapter 12a abgewandten Richtung betrachtet.

Das Fluidsperrelement 26a ist zu einem Fixieren der fluidischen Verbindung des fluidischen Koppelelements 24a mit dem fluidischen Verbindungselement 22a vorgesehen. Das Fluidsperrelement 26a ist verschiebbar, insbesondere gegenüber dem Kappenelement 44a, an der Abdeckeinheit 16a gelagert. Das Fluidsperrelement 26a ist entlang der Längsachse 50a der Abdeckeinheit 16a verschiebbar gelagert. Das Fluidsperrelement 26a ist dazu vorgesehen, das fluidische Koppelelement 24a in einer Schiebeposition, insbesondere einer Verbindungsposition, insbesondere senkrecht zur Längsachse 50a der Abdeckeinheit 16a, zu umgreifen. Das Fluidsperrelement 26a hintergreift das fluidische Verbindungselement 22a in der Verbindungsposition, insbesondere betrachtet vom Haltebügel 32a des Wischarmadapters 14a und/oder betrachtet vom Einhängungsfortsatz 54a, 54a' des fluidischen Koppelelements 24a.

Optional kann das Fluidsperrelement 26a in der Verbindungsposition eine Rastverbindung mit dem Wischblattadapter 12a ausbilden, insbesondere zu einem Sichern der Verbindungsposition gegen ein ungewolltes Lösen der Verbindungsposition.

Die Abdeckeinheit 16a umfasst zumindest ein Abdeckfixierelement 28a. Das Abdeckfixierelement 28a ist zu einer zumindest teilweisen Positionsfixierung der zumindest einen Abdeckeinheit 16a mit dem zumindest einen Wischarmadapter 14a vorgesehen. Das Abdeckfixierelement 28a ist zu einer Positionsfixierung der zumindest einen Abdeckeinheit 16a in einer Schwenkposition, insbesondere um die Abdeckschwenkachse 46a, gegenüber dem zumindest einen Wischarmadapter 14a vorgesehen. Insbesondere ist das Abdeckfixierelement 28a beweglich an der Abdeckeinheit 16a gelagert. Das Abdeckfixierelement 28a ist verschiebbar an der Abdeckeinheit 16a, insbesondere dem Kappenelement 44a, gelagert.

Das Abdeckfixierelement 28a ist mit der Abdeckeinheit 16a um die Abdeckschwenkachse 46a schwenkbar gegenüber dem Wischarmadapter 14a. Das Abdeckfixierelement 28a ist von dem Kappenelement 44a bedeckt aus einer dem Wischblattadapter 12a abgewandten Richtung betrachtet.

Das Abdeckfixierelement 28a ist hakenartig ausgebildet. Das Abdeckfixierelement 28a ist zu einem Umgreifen des Haltebügels 32a des Wischarmadapters 14a ausgebildet. In einer Verbindungsposition des Abdeckfixierelements 28a umgreift das Abdeckfixierelement 28a den Haltebügel 32a teilweise. In der Verbindungsposition sichert das Abdeckfixierelement 28a die Abdeckeinheit 16a gegen ein Verschwenken um die Abdeckschwenkachse 46a gegenüber dem Wischarmadapter 14a, insbesondere an dem Haltebügel 32a.

Das Abdeckfixierelement 28a weist einen Kontakt an einer Seite, insbesondere in Richtung der Längsachse 50a der Abdeckeinheit 16a, zu dem Fluidsperrelement 26a auf. Die Seite des Abdeckfixierelements 28a, welche einen Kontakt zu dem Fluidsperrelement 26a aufweist, ist konvex gebogen, insbesondere entlang eines Kreisbogens 56a um die Schwenkachse 20a, ausgebildet. Die Seite des Fluidsperrelements 26a, welche einen Kontakt zu dem Abdeckfixierelement 28a aufweist, ist konkav gebogen, insbesondere entlang des Kreisbogens 56a um die Schwenkachse 20a, ausgebildet.

Das Abdeckfixierelement 28a bildet einen Formschluss mit dem Fluidsperrelement 26a. Durch den Formschluss sind das Abdeckfixierelement 28a und das Fluidsperrelement 26a zusammen verschiebbar an der Abdeckeinheit 16a, insbesondere gegenüber dem Wischarmadapter 14a und/oder dem Kappenelement 44a, gelagert.

Die Wischervorrichtung 10a weist zumindest ein Betätigungselement 30a auf. Das Betätigungselement 30a ist als ein Slider-Element, insbesondere als ein Schieber, an, insbesondere zumindest zum Großteil in, dem Kappenelement 44a ausgebildet.

Das Betätigungselement 30a umfasst zwei miteinander einstückig verbundene Teile, insbesondere Betätigungstastteile 74a, 74a'. Alternativ können die Betätigungstastteile 74a, 74a' voneinander getrennte Teile sein. Die Betätigungstastteile 74a, 74a' sind jeweils axial entlang einer maximalen Längsachse des Betätigungselements betrachtet auf Höhe eines Endes der Abdeckeinheit 16a angeordnet. Die Betätigungstastteile 74a, 74a' umgreifen das Fluidsperrelement 26a und das Abdeckfixierelement 28a in Richtung der Längsachse 50a der Abdeckeinheit 16a. Die Betätigungstastteile 74a, 74a' bilden jeweils zumindest einen Formschluss, insbesondere einen Stoffschluss, entweder mit dem zumindest einen Fluidsperrelement 26a oder mit dem Abdeckfixierelement 28a.

Ein der Abdeckschwenkachse 46a zugewandtes Betätigungstastteil 74a bildet einen Formschluss mit dem Fluidsperrelement 26a. Das Fluidsperrelement 26a weist einen Kontakt an einer Seite, insbesondere in Richtung der Längsachse 50a der Abdeckeinheit 16a, zu dem Betätigungstastteil 74a auf. Die Seite des Fluidsperrelements 26a, welche einen Kontakt zu dem Betätigungstastteil 74a aufweist, ist konvex gebogen, insbesondere entlang eines Fluidkreisbogens 58a um die Schwenkachse 20a, ausgebildet. Die Seite des Betätigungstastteils 74a, welche einen Kontakt zu dem Fluidsperrelement 26a aufweist, ist konkav gebogen, insbesondere entlang des Fluidkreisbogens 58a um die Schwenkachse 20a, ausgebildet. Der Fluidkreisbogen 58a um die Schwenkachse 20a weist einen größeren Radius auf, als der Kreisbogen 56a um die Schwenkachse 20a.

Ein der Abdeckschwenkachse 46a abgewandtes Betätigungstastteil 74a' ist stoffschlüssig mit dem Abdeckfixierelement 28a verbunden. Das Betätigungselement 30a, insbesondere das Betätigungstastteil 74a', ist mit dem zumindest einen Abdeckfixierelement 28a, insbesondere einstückig, verbunden.

Das Betätigungselement 30a ist dazu vorgesehen, das zumindest eine Fluidsperrelement 26a und das zumindest eine Abdeckfixierelement 28a zusammen durch eine, insbesondere translatorische, Bewegung des Betätigungselements 30a relativ zu dem Wischarmadapter 14a in eine Verbindungsposition und/oder in eine Lösungsposition zu überführen. Ein Verschieben eines der Betätigungstastteile 74a, 74a', insbesondere entlang der Längsachse 50a der Abdeckeinheit 16a, verschiebt auch das Abdeckfixierelement 28a, das Fluidsperrelement 26a und das jeweils andere Betätigungstastteil 74a, 74a' in eine Schiebeposition, insbesondere die Verbindungsposition oder eine Lösungsposition. Eine Lösungsposition des Fluidsperrelements 26a ist eine Schiebeposition, in welcher die fluidische Verbindung des fluidischen Koppelelements 24a mit dem fluidischen Verbindungselement 22a, ungesichert durch das Fluidsperrelement 26a ist. Eine Lösungsposition des Abdeckfixierelements 28a ist eine Schiebeposition des Abdeckfixierelements 28a, in welcher die Abdeckeinheit 16a um die Abdeckschwenkachse 46a verschwenkbar ist.

Das Fluidsperrelement 26a ist zumindest teilweise verschwenkbar gegenüber dem zumindest einen Wischarmadapter 14a mit zumindest einem Betätigungselement 30a verbunden. Das Fluidsperrelement 26a ist in der Verbindungsposition des Fluidsperrelements 26a mit dem Wischblattadapter 12a um die Schwenkachse 20a gegenüber dem Wischarmadapter 14a beweglich, insbesondere verschwenkbar. Das Fluidsperrelement 26a ist in der Verbindungsposition des Fluidsperrelements 26a mit dem Wischblattadapter 12a um die Schwenkachse 20a gegenüber dem Betätigungstastteil 74a beweglich, insbesondere verschwenkbar.

Bei einer Verschwenkung des Fluidsperrelements 26a in der Verbindungsposition des Fluidsperrelements 26a mit dem Wischblattadapter 12a um die Schwenkachse 20a gegenüber dem Betätigungstastteil 74a bleibt die Verbindung durch den Formschluss des Betätigungstastteils 74a mit dem Fluidsperrelement 26a bestehen, insbesondere durch die gebogene Form der Außenseiten. Bei einer Verschwenkung des Fluidsperrelements 26a in der Verbindungsposition des Fluidsperrelements 26a mit dem Wischblattadapter 12a um die Schwenkachse 20a gegenüber dem Betätigungstastteil 74a bleibt die Verbindung durch den Formschluss des Abdeckfixierelements 28a mit dem Fluidsperrelement 26a bestehen, insbesondere durch die gebogene Form der Außenseiten.

Das zumindest eine Fluidsperrelement 26a ist beweglich, insbesondere verschwenkbar, gegenüber dem zumindest einen Abdeckfixierelement 28a mit dem zumindest einen Wischblattadapter 12a verbindbar. Das Fluidsperrelement 26a ist in der Verbindungsposition des Fluidsperrelements 26a mit dem Wischblattadapter 12a um die Schwenkachse 20a gegenüber dem Abdeckfixierelement 28a beweglich, insbesondere verschwenkbar.

Das Betätigungselement 30a bildet in einer Verbindungsposition, insbesondere des Abdeckfixierelements 28a und/oder des Fluidsperrelements 26a eine Rastverbindung mit dem Wischblattadapter 12a aus. Insbesondere bildet ein an dem Betätigungstastteil 74a angeordnetes Rastelement 76a eine Rastverbindung mit dem Kappenelement 44a aus.

Optional oder zusätzlich kann das Fluidsperrelement 26a in der Verbindungsposition eine Rastverbindung mit dem Wischblattadapter 12a ausbilden. Optional oder zusätzlich kann das Abdeckfixierelement 28a in der Verbindungsposition eine Rastverbindung mit dem Wischarmadapter 14a ausbilden.

Durch das Verschieben des Betätigungselements 30a kann die fluidische Verbindung gesichert werden und die Abdeckeinheit 16a gegen ein Verschwenken um die Abdeckfixiereinheit am Wischarmadapter 14a gesichert werden.

Das Fluidsperrelement 26a folgt der Bewegung, insbesondere Verschiebung, des Abdeckfixierelements 28a, insbesondere des Betätigungselements 30a, bevorzugt der Betätigungstastteile 74a, 74a', wobei das Fluidsperrelement 26a beweglich, insbesondere verschwenkbar, gegenüber dem Abdeckfixierelement 28a ist, insbesondere in jeder Schiebeposition. Das Wischblatt 60a ist schwenkbar mit dem Wischarmadapter 14a verbunden und fluidisch versorgt.

Das Betätigungselement 30a kann über die Betätigungstastteile 74a, 74a' an den Enden der maximalen Erstreckung des Kappenelements 44a in Richtung der Längsachse 50a der Abdeckeinheit 16a bedient werden. Das Betätigungselement 30a erstreckt sich in Richtung der Längsachse 50a der Abdeckeinheit 16a weiter als das Kappenelement 44a. insbesondere stehen die Betätigungstastteile 74a, 74a' von dem Kappenelement 44a in Richtung der Längsachse 50a der Abdeckeinheit 16a ab. Insbesondere sind die Betätigungstastteilen 74a, 74a'jeweils von außen sichtbar an dem Kappenelement 44a angeordnet. Denkbar ist, dass an den Betätigungstastteilen 74a, 74a' Knöpfe oder Hebel angeordnet sind, welche in eine Richtung senkrecht zu der Längsachse 50a der Abdeckeinheit 16a von den Betätigungstastteilen 74a, 74a' abstehen und sich durch Ausnehmungen an dem Kappenelement 44a erstrecken, insbesondere zu einem Bedienen des Betätigungselements 30a.

Optional können weitere mechanische Umlenkungselemente an den Betätigungstastteilen 74a, 74a' angeordnet sein.

Optional können alle wasserführenden Elemente, wie beispielsweise ein Fluidkanal des Wischblattadapters 12a und/oder die genannte Kanaleinheit, im Wischblatt 60a als indirekte Heizung genutzt werden.

Optional kann die Abdeckeinheit 16a und/oder der Wischarmadapter 14a ein elektrisches Koppelelement aufweisen. Optional kann der Wischblattadapter 12a ein elektrisches Verbindungselement aufweisen, insbesondere zu einer elektrischen Verbindung, insbesondere des Wischarms 64a mit dem Wischblatt 60a. Optional ist das elektrische Koppelelement mit der Abdeckeinheit 16a um die Abdeckschwenkachse 46a schwenkbar, insbesondere in eine Position, in welcher es mit dem elektrischen Verbindungselement verbunden ist. Optional kann/können das elektrische Verbindungselement und/oder das elektrisch Koppelelement beweglich gelagert sein.

Figur 4 zeigt ein Verfahren zur Montage einer erfindungsgemäßen Wischervorrichtung 10a. in zumindest einem Verfahrensschritt, insbesondere einem Schwenkschritt 88a, wird die Abdeckeinheit 16a zu einem Abdecken des Wischblattadapters 12a an den Wischblattadapter 12a verschwenkt. In zumindest einem Verfahrensschritt, insbesondere dem Schwenkschritt 88a, wird das fluidische Koppelelement 24a mit dem fluidischen Verbindungselement 22a verbunden. In zumindest einem Verfahrensschritt, insbesondere einem Schiebeschritt 90a, wird das Betätigungselement 30a in Richtung der Längsachse 50a der Abdeckeinheit 16a und/oder des Wischblattadapters 12a verschoben. In zumindest einem Verfahrensschritt, insbesondere dem Schiebeschritt 90a, wird das Fluidsperrelement 26a und das Abdeckfixierelement 28a in die Fixierposition verschoben. Insbesondere wird der Schiebeschritt 90a nach dem Schwenkschritt 88a ausgeführt.

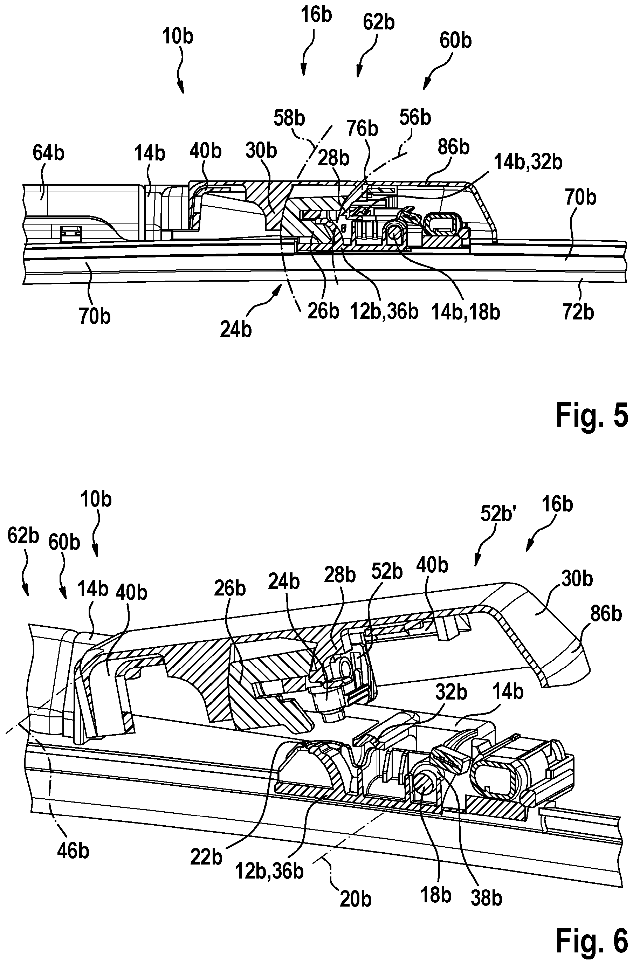

In den Figuren 5 bis 10 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In den Ausführungsbeispielen der Figuren 5 bis 10 ist der Buchstabe a durch den Buchstaben b ersetzt.

Figur 5 zeigt, dass die zumindest eine Abdeckeinheit 16b eine Rahmeneinheit 40b aufweist. Die Rahmeneinheit 40b ist zu einer beweglichen Lagerung des zumindest einen Betätigungselements 30b vorgesehen.

Die Rahmeneinheit 40b ist beweglich, insbesondere um die Abdeckschwenkachse 46b verschwenkbar, mit dem Wischarmadapter 14b verbunden.

Ein Kappenelement 86b ist direkt unverbunden mit dem Wischblattadapter 12b ausgebildet. Das Kappenelement 86b ist verschiebbar an der Rahmeneinheit 40b gelagert. Das Kappenelement 86b bildet das Betätigungselement 30b aus.

Das Betätigungselement 30b ist mit dem zumindest einen Abdeckfixierelement 28b, insbesondere einstückig, verbunden. Das Kappenelement 86b ist einstückig mit dem Abdeckfixierelement 28b verbunden. Das Kappenelement 86b bildet einen Formschluss mit dem zumindest einen Fluidsperrelement 26b.

Das Kappenelement 86b bildet einen Formschluss entlang eines Fluidkreisbogens 58b um die Schwenkachse 20b mit dem zumindest einen Fluidsperrelement 26b. Das Abdeckfixierelement 28b bildet einen Formschluss entlang eines Kreisbogens 56b um die Schwenkachse 20b mit dem zumindest einen Fluidsperrelement 26b.

Die zumindest eine Abdeckeinheit 16b ist durch ein zumindest teilweises Verschieben der zumindest einen Abdeckeinheit 16b gegenüber der zumindest einen Rahmeneinheit 40b mit dem Wischarmadapter 14b verbindbar oder lösbar.

Figur 6 zeigt, dass das fluidische Koppelelement 24b querverschieblich mit der Rahmeneinheit 40b verbunden ist. Insbesondere begrenzt das fluidische Koppelelement 24b zwei Lagerausnehmungen 52b, 52b'. Die Rahmeneinheit 40b bildet zwei Einhängungsfortsätze 54b, 54b' aus. Die Einhängungsfortsätze 54b, 54b' sind in den Lagerausnehmungen 52b, 52b' angeordnet.

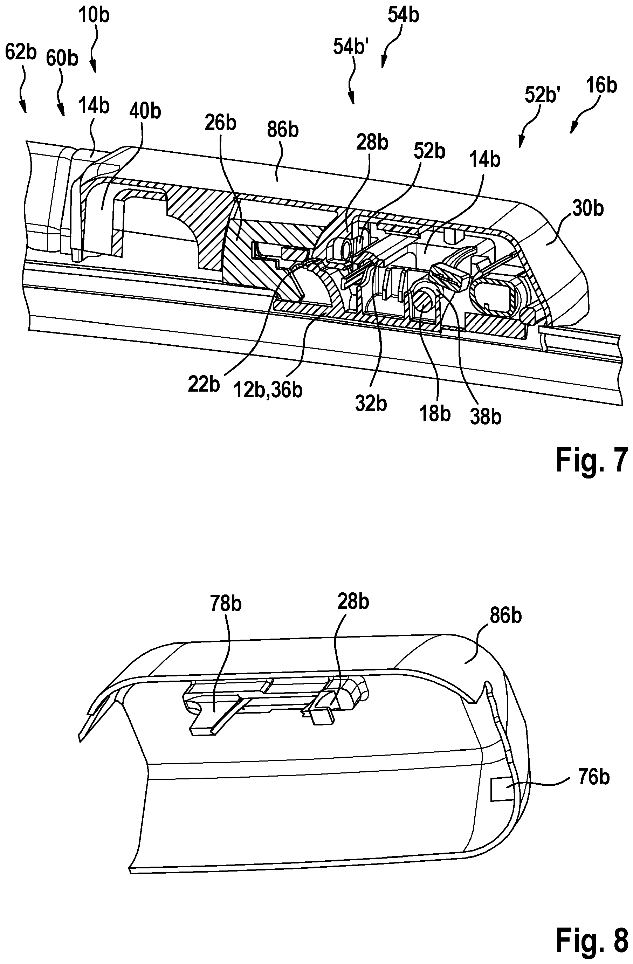

Figur 7 zeigt die Abdeckeinheit 16b mit dem Fluidsperrelement 26b und dem Abdeckfixierelement 28b in einer Lösungsposition.

Figur 8 zeigt das als Betätigungselement 30b ausgebildete Kappenelement 86b. Optional kann an dem Kappenelement 86b ein Rastelement 76b angeordnet sein zu einer Rastverbindung mit der Rahmeneinheit 40b in zumindest einer Schiebeposition des Kappenelements 86b.

Das Kappenelement 86b weist einen Betätigungsfortsatz 78b auf, welcher insbesondere die Funktion des Betätigungstastteils 74a des vorherigen Ausführungsbeispiels ausübt. Der Betätigungsfortsatz 78b bildet, insbesondere beim Verschieben des Kappenelements 86b, einen Formschluss mit dem Fluidsperrelement 26b (vgl. Fig. 6).

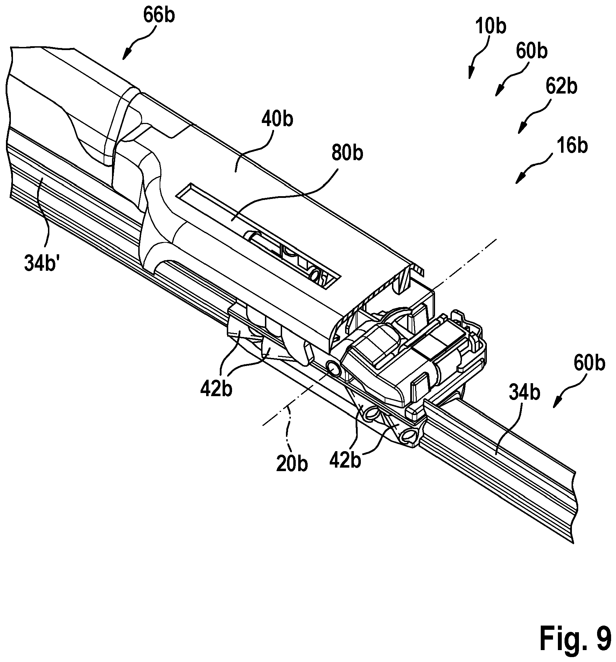

Figur 9 zeigt die Rahmeneinheit 40b mit einer Schiebeausnehmung 80b. An der Schiebeausnehmung 80b ist das Kappenelement 86b, insbesondere der Betätigungsfortsatz 78b des Kappenelements 86b und das Abdeckfixierelement 28b, verschiebbar gelagert.

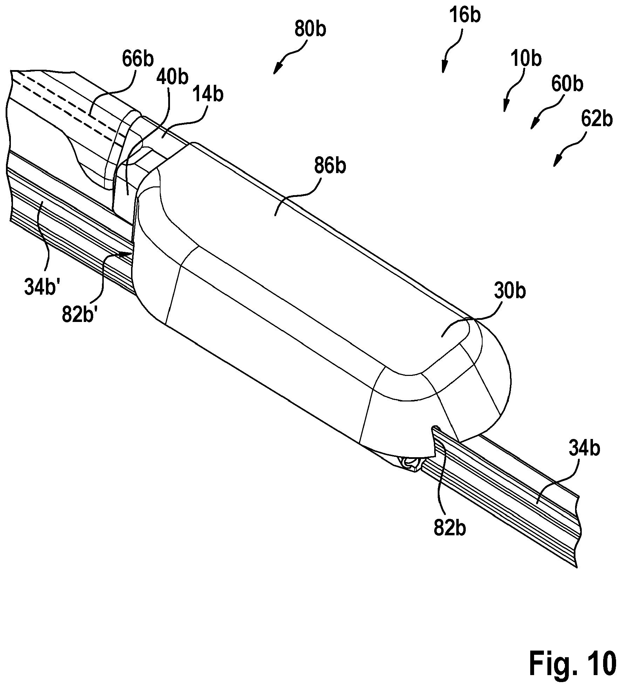

Figur 10 zeigt das Kappenelement 86b, welches verschiebbar an der Schiebeausnehmung 80b der Rahmeneinheit 40b gelagert ist als Betätigungselement 30b. Das Kappenelement 86b weist zwei Windabweiserausnehmungen 82b, 82b' auf zu einer teilweisen Aufnahme der Spoilerelemente 34, 34' auf.

## Patentansprüche

1. Wischervorrichtung mit zumindest einem Wischblattadapter (12a; 12b), welcher zumindest ein fluidisches Verbindungselement (22a; 22b) aufweist, und mit zumindest einem Wischarmadapter (14a; 14b), und mit zumindest einer Abdeckeinheit (16a; 16b), mit zumindest einem fluidischen Koppelelement (24a; 24b) zu einer fluidischen Verbindung mit dem zumindest einen fluidischen Verbindungselement (22a; 22b), mit zumindest einem Fluidsperrelement (26a; 26b) zu einem Fixieren der fluidischen Verbindung des zumindest einen fluidischen Koppelelements (24a; 24b) mit dem zumindest einen fluidischen Verbindungselement (22a; 22b), und mit zumindest einem Abdeckfixierelement (28a; 28b) zu einer zumindest teilweisen Positionsfixierung der zumindest einen Abdeckeinheit (16a; 16b) mit dem zumindest einen Wischarmadapter (14a; 14b), wobei zumindest ein Betätigungselement (30a; 30b), welches dazu vorgesehen ist, das zumindest eine Fluidsperrelement (26a; 26b) und das zumindest eine Abdeckfixierelement (28a, 28b) zusammen durch eine, insbesondere translatorische, Bewegung des Betätigungselements (30a; 30b) relativ zu dem Wischarmadapter (14a; 14b) in eine Verbindungsposition und/oder in eine Lösungsposition zu überführen, **dadurch gekennzeichnet, dass** das zumindest eine fluidische Koppelelement (24a; 24b) beweglich, insbesondere querverschieblich, gegenüber der zumindest einen Abdeckeinheit (16a; 16b), an der zumindest einen Abdeckeinheit (16a; 16b) gelagert ist.

2. Wischervorrichtung zumindest nach Anspruch 1 **dadurch gekennzeichnet, dass** die zumindest eine Abdeckeinheit (16b) eine Rahmeneinheit (40b) zu einer beweglichen Lagerung des zumindest einen Betätigungselements (30b) aufweist, wobei die zumindest eine Abdeckeinheit (16b) durch ein zumindest teilweises Verschieben der zumindest einen Abdeckeinheit (16b) gegenüber der zumindest einen Rahmeneinheit (40b) mit dem Wischarmadapter (14b) verbindbar oder lösbar ist.

3. Wischervorrichtung nach einem der vorhergehenden Ansprüche, **dadurch gekennzeichnet, dass** das zumindest eine Fluidsperrelement (26a; 26b) zumindest teilweise verschwenkbar gegenüber dem zumindest einen Wischarmadapter (14a, 14b) mit zumindest einem Betätigungselement (30a; 30b) verbunden ist.

4. Wischervorrichtung nach einem der vorhergehenden Ansprüche, **dadurch gekennzeichnet, dass** das zumindest eine Fluidsperrelement (26a; 26b) beweglich, insbesondere verschwenkbar, gegenüber dem zumindest einen Abdeckfixierelement (28a; 28b) mit dem zumindest einen Wischblattadapter (12a; 12b) verbindbar ist.

5. Wischervorrichtung nach einem der vorhergehenden Ansprüche, **gekennzeichnet durch** zumindest ein Betätigungselement (30a; 30b), welches in einer Verbindungsposition, insbesondere des Abdeckfixierelements (28a; 28b) und/oder des Fluidsperrelements (26a; 26b), eine Rastverbindung mit dem Wischblattadapter (12a; 12b) ausbildet.

6. Wischervorrichtung nach einem der vorhergehenden Ansprüche, **gekennzeichnet durch** zumindest ein Betätigungselement (30a; 30b), welches mit dem zumindest einen Abdeckfixierelement (28a; 28b), insbesondere einstückig, verbunden ist.

7. Wischervorrichtung zumindest nach Anspruch 2, **dadurch gekennzeichnet, dass** das zumindest eine fluidische Koppelelement (24b), beweglich, insbesondere querverschieblich, mit der Rahmeneinheit (40b) verbunden ist.

8. Scheibenwischer, welcher zumindest eine Wischervorrichtung (10a; 10b) nach einem der Ansprüche 1 bis 7 umfasst, und mit einem Wischarm (64a; 64b) und mit einem Wischblatt (60a; 60b).

9. Verfahren zur Montage einer Wischervorrichtung (10a; 10b) nach einem der Ansprüche 1 bis 7.

## Claims

1. Wiper device having at least one wiper-blade adaptor (12a; 12b), which has at least one fluidic connecting element (22a; 22b), and having at least one wiper-arm adaptor (14a; 14b), and having at least one cover unit (16a; 16b), having at least one fluidic coupling element (24a; 24b) for fluidic connection to the at least one fluidic connecting element (22a; 22b), having at least one fluid blocking element (26a; 26b) for fixing the fluidic connection of the at least one fluidic coupling element (24a; 24b) to the at least one fluidic connecting element (22a; 22b), and having at least one cover-fixing element (28a; 28b) for at least partially positionally fixing the at least one cover unit (16a; 16b) to the at least one wiper-arm adaptor (14a; 14b), wherein at least one actuating element (30a; 30b) which is provided for transferring the at least one fluid blocking element (26a; 26b) and the at least one cover-fixing element (28a, 28b) together into a connection position and/or into a release position by way of an in particular translational movement of the actuating element (30a; 30b) relative to the wiper-arm adaptor (14a; 14b), **characterized in that** the at least one fluidic coupling element (24a; 24b) is mounted on the at least one cover unit (16a; 16b) so as to be movable, in particular transversely displaceable, in relation to the at least one cover unit (16a; 16b) .

2. Wiper device according to Claim 1, **characterized in that** the at least one cover unit (16b) has a frame unit (40b) for movable mounting of the at least one actuating element (30b), wherein the at least one cover unit (16b) is connectable to or releasable from the wiper-arm adaptor (14b) by way of an at least partial displacement of the at least one cover unit (16b) in relation to the at least one frame unit (40b).

3. Wiper device according to either of the preceding claims, **characterized in that** the at least one fluid blocking element (26a; 26b) is connected to at least one actuating element (30a; 30b) so as to be at least partially pivotable in relation to the at least one wiper-arm adaptor (14a, 14b).

4. Wiper device according to one of the preceding claims, **characterized in that** the at least one fluid blocking element (26a; 26b) is connectable to the at least one wiper-blade adaptor (12a; 12b) so as to be movable, in particular pivotable, in relation to the at least one cover-fixing element (28a; 28b).

5. Wiper device according to one of the preceding claims, **characterized by** at least one actuating element (30a; 30b) which, in a connection position, in particular of the cover-fixing element (28a; 28b) and/or of the fluid blocking element (26a; 26b), forms a latching connection with the wiper-blade adaptor (12a; 12b).

6. Wiper device according to one of the preceding claims, **characterized by** at least one actuating element (30a; 30b) which is connected, in particular in one piece, to the at least one cover-fixing element (28a; 28b).

7. Wiper device at least according to Claim 2, **characterized in that** the at least one fluidic coupling element (24b) is movably, in particular transversely displaceably, connected to the frame unit (40b).

8. Window washer comprising at least one wiper device (10a; 10b) according to one of Claims 1 to 7 and having a wiper arm (64a; 64b) and having a wiper blade (60a; 60b).

9. Method for mounting a wiper device (10a; 10b) according to one of Claims 1 to 7.

## Revendications

1. Dispositif d'essuie-glace avec au moins un adaptateur de balai d'essuie-glace (12a ; 12b), qui présente au moins un élément de liaison fluidique (22a ; 22b), et avec au moins un adaptateur de bras d'essuie-glace (14a ; 14b), et avec au moins une unité de recouvrement (16a ; 16b), avec au moins un élément d'accouplement fluidique (24a ; 24b) pour une liaison fluidique à l'au moins un élément de liaison fluidique (22a ; 22b), avec au moins un élément de blocage de fluide (26a ; 26b) pour une fixation de la liaison fluidique de l'au moins un élément d'accouplement fluidique (24a ; 24b) à l'au moins un élément de liaison fluidique (22a ; 22b), et avec au moins un élément de fixation de recouvrement (28a ; 28b) pour une fixation en position au moins partielle de l'au moins une unité de recouvrement (16a ; 16b) à l'au moins un adaptateur de bras d'essuie-glace (14a ; 14b), au moins un élément d'actionnement (30a ; 30b) qui est prévu pour transférer l'au moins un élément de blocage de fluide (26a ; 26b) et l'au moins un élément de fixation de recouvrement (28a, 28b) ensemble par un mouvement, notamment de translation, de l'élément d'actionnement (30a ; 30b) par rapport à l'adaptateur de bras d'essuie-glace (14a ; 14b) dans une position de liaison et/ou dans une position de détachement, **caractérisé en ce que** l'au moins un élément d'accouplement fluidique (24a ; 24b) est monté mobile, notamment déplaçable transversalement, par rapport à l'au moins une unité de recouvrement (16a ; 16b), sur l'au moins une unité de recouvrement (16a ; 16b).

2. Dispositif d'essuie-glace au moins selon la revendication 1, **caractérisé en ce que** l'au moins une unité de recouvrement (16b) présente une unité de cadre (40b) pour un montage mobile de l'au moins un élément d'actionnement (30b), l'au moins une unité de recouvrement (16b) pouvant être reliée à ou détachée de l'adaptateur de bras d'essuie-glace (14b) par un déplacement au moins partiel de l'au moins une unité de recouvrement (16b) par rapport à l'au moins une unité de cadre (40b).

3. Dispositif d'essuie-glace selon l'une quelconque des revendications précédentes, **caractérisé en ce que** l'au moins un élément de blocage de fluide (26a ; 26b) est relié à au moins un élément d'actionnement (30a ; 30b) de manière au moins partiellement pivotante par rapport à l'au moins un adaptateur de bras d'essuie-glace (14a, 14b).

4. Dispositif d'essuie-glace selon l'une quelconque des revendications précédentes, **caractérisé en ce que** l'au moins un élément de blocage de fluide (26a ; 26b) peut être relié à l'au moins un adaptateur de balai d'essuie-glace (12a ; 12b) de manière mobile, notamment pivotante, par rapport à l'au moins un élément de fixation de recouvrement (28a ; 28b).

5. Dispositif d'essuie-glace selon l'une quelconque des revendications précédentes, **caractérisé par** au moins un élément d'actionnement (30a ; 30b) qui, dans une position de liaison, notamment de l'élément de fixation de recouvrement (28a ; 28b) et/ou de l'élément de blocage de fluide (26a ; 26b), forme une liaison par encliquetage avec l'adaptateur de balai d'essuie-glace (12a ; 12b).

6. Dispositif d'essuie-glace selon l'une quelconque des revendications précédentes, **caractérisé par** au moins un élément d'actionnement (30a ; 30b) qui est relié, notamment d'un seul tenant, à l'au moins un élément de fixation de recouvrement (28a ; 28b).

7. Dispositif d'essuie-glace au moins selon la revendication 2, **caractérisé en ce que** l'au moins un élément d'accouplement fluidique (24b) est relié de manière mobile, notamment de manière déplaçable transversalement, à l'unité de cadre (40b).

8. Essuie-glace, qui comprend au moins un dispositif d'essuie-glace (10a ; 10b) selon l'une quelconque des revendications 1 à 7, et avec un bras d'essuie-glace (64a ; 64b) et avec un balai d'essuie-glace (60a ; 60b).

9. Procédé de montage d'un dispositif d'essuie-glace (10a ; 10b) selon l'une quelconque des revendications 1 à 7.
